Europäisches Patentamt

European Patent Office

Office européen des brevets

(19)

(11) Numéro de publication : **0 015 195**
**B1**

# (12) FASCICULE DE BREVET EUROPÉEN

(45) Date de publication du fascicule du brevet :
20.02.85

(21) Numéro de dépôt : 80400215.2

(22) Date de dépôt : 15.02.80

(51) Int. Cl.⁴ : **G 01 N 11/14**

(54) **Appareil de détermination des propriétés rhéométriques d'un fluide.**

(30) Priorité : 22.02.79 FR 7904585

(43) Date de publication de la demande :
03.09.80 Bulletin 80/18

(45) Mention de la délivrance du brevet :
20.02.85 Bulletin 85/08

(84) Etats contractants désignés :
**BE CH DE GB NL**

(56) Documents cités :
**US-A- 2 305 531**
**US-A- 3 269 171**

(73) Titulaire : **Képés, André**
**22 avenue Prise d'Eau**
**F-78110 Le Vesinet (FR)**

(72) Inventeur : **Képés, André**
**22 avenue Prise d'Eau**
**F-78110 Le Vesinet (FR)**

(74) Mandataire : **de Haas, Michel**
**Cabinet Beau de Loménie 55 rue d'Amsterdam**
**F-75008 Paris (FR)**

Jouve, 18, rue St-Denis, 75001 Paris, France

## Description

La présente invention concerne un appareil pour la détermination des propriétés rhéométriques d'un fluide, ledit appareil comportant :

— un premier élément ayant une cavité formant un bicône d'angle au sommet $2\alpha$, $\alpha$ étant au plus égal à 90°,

— un second élément montré à l'intérieur de ladite cavité ledit second élément ayant la forme d'un bicône d'angle au sommet $2\beta$, $\beta$ étant au plus égal à 90°, les axes des deux bicônes étant confondus,

— des moyens pour réaliser la rotation dudit premier élément autour du second élément et

— des conduits d'amenée et de départ dudit fluide dans la cavité située entre ledit premier élément et ledit second élément.

On connaît l'importance industrielle de la mesure des propriétés rhéologiques des matériaux ; le principe de ces mesures consiste à soumettre un matériau qui se trouve dans un état déterminé à un certain nombre de sollicitations connues et contrôlées (par exemple un cisaillement) et à mesurer la réaction dudit matériau à ces sollicitations.

On connaît également un certain nombre d'appareils conçus pour la détermination des propriétés rhéologiques des matériaux. Par exemple, on a déjà préconisé, pour la mesure de la viscosité de matériaux fluides, des dispositifs du type rhéogoniomètre ou des dispositifs de type gradeur. Dans les dispositifs de type rhéogoniomètre, le fluide dont on veut mesurer les propriétés rhéologiques, par exemple la viscosité, est introduit entre deux surfaces dont l'une est plane et dont l'autre est soit plane et parallèle à la première, soit en forme de cône dont l'axe est perpendiculaire au plan de la première surface ; l'une des surfaces est soumise à un mouvement rotatif contrôlé et on détermine par des moyens connus la réaction exercée par le fluide soumis aux contraintes décrites sur la deuxième surface ; l'inconvénient majeur des dispositifs de type rhéogoniomètre réside dans l'indétermination introduite par l'existence des « bords » latéraux des volumes fluides. Dans les dispositifs de type gradeur, le fluide à étudier est introduit dans un tube et on mesure l'écoulement dudit fluide dans ledit tube dans des conditions expérimentales déterminées. Les inconvénients majeurs des dispositifs de ce type résident dans le caractère nécessairement discontinu de la mesure, dans l'impossibilité de l'utiliser pour l'asservissement et dans une très mauvaise précision.

On a déjà proposé dans le brevet US-A-2 305 531 un appareil pour la mesure de la viscosité d'un fluide ; cet appareil est constitué par deux bicônes ayant le même axe situés l'un dans l'autre, dont les faces sont parallèles, l'un des bicônes tournant autour de l'axe commun ; cet appareil étant plongé dans un fluide, ledit fluide est aspiré grâce à la force centrifuge entre les bicônes par deux ouvertures disposées autour dudit axe et est rejeté à l'extérieur par des ouvertures ménagées à la périphérie des cônes. Un tel appareil peut prétendre donner une indication sur la viscosité du fluide dans lequel il est plongé mais ne peut prétendre permettre de mesurer cette viscosité du fait, d'une part, que le mouvement du fluide entre les bicônes n'est pas déterminé et, d'autre part, que des indéterminations considérables viennent du débit inconnu (et d'ailleurs jamais nul) sortant par les ouvertures ménagées à la périphérie du bicône.

La présente invention concerne donc un appareil permettant de déterminer les propriétés rhéologiques d'un fluide comportant :

— un premier élément (corps) ayant une cavité formant un bicône d'angle au sommet $2\alpha$, $\alpha$ étant au plus égal à 90°,

— un second élément montré à l'intérieur de ladite cavité ledit second élément ayant la forme d'un bicône d'angle au sommet $2\beta$, $\beta$ étant au plus égal à 90°, les axes des deux bicônes étant confondus,

— des moyens pour réaliser la rotation dudit premier élément autour du second élément et

— un conduit d'amenée et un conduit de départ dudit fluide dans la cavité située entre ledit premier élément et ledit second élément, ledit appareil étant caractérisé en ce que le conduit d'amenée traverse ledit second élément selon son axe et ledit conduit de départ est situé autour dudit conduit d'amenée et que ledit appareil comporte des moyens pour amener le fluide, dans des conditions opératoires constantes et avec un débit connu par ledit conduit d'amenée.

Dans le rhéomètre selon l'invention, on utilise de préférence, et nécessairement lorsque le rhéomètre est utilisé comme « gradeur », un entraînement à couple imposé et une mesure de la vitesse de rotation.

L'amenée du fluide dans l'entrefer, c'est-à-dire entre le corps et la surface interne de la cavité s'effectue par un canal axial ménagé dans l'élément — corps ou cavité — restant fixe. Le fluide parcourt la totalité de l'entrefer (et est soumis au cisaillement durant ce parcours) par un flux divergent puis convergent. Le fluide est évacué dans une région située dans l'axe de l'appareil soit côté axe moteur lorsque la cavité est fixe, soit côté opposé à l'axe moteur lorsque le corps est fixe.

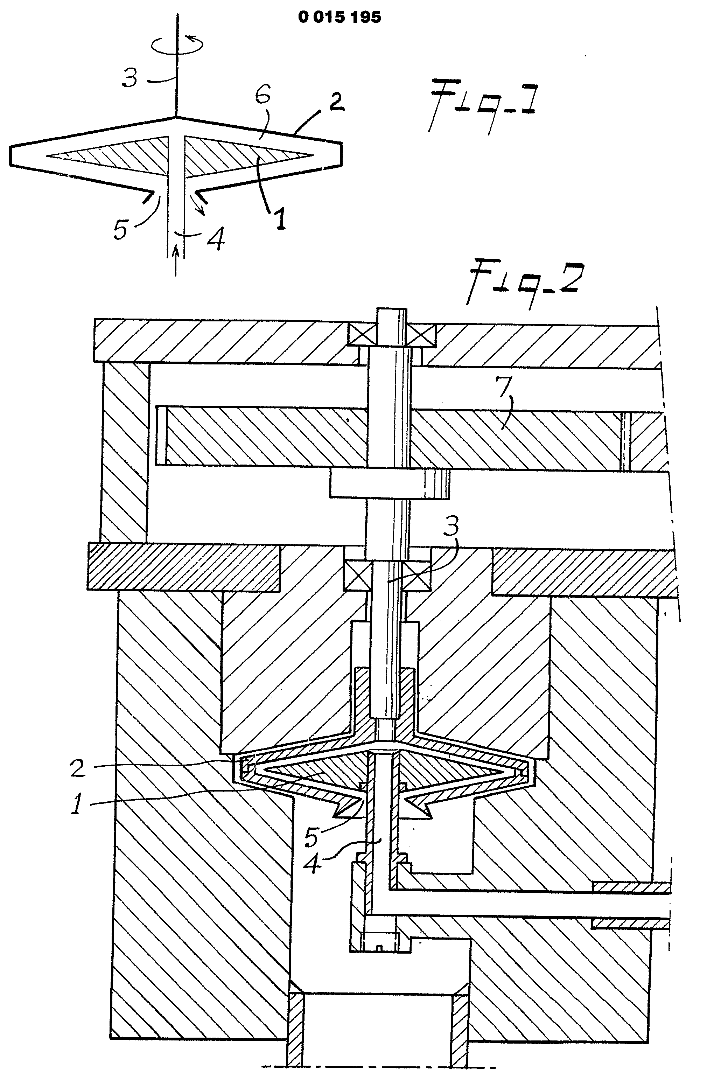

Des schémas de principe du rhéomètre gradeur selon l'invention sont présentés sur les figures 1 et 2.

Le corps est constitué par deux cônes réunis par leur base formant ainsi un bicône. Les deux cônes formant le bicône sont généralement identiques bien que cette condition ne soit pas impérative. Une section droite de ce bicône présente deux angles au sommet $2\alpha$, $\alpha$ étant de préférence inférieur à 90° ; en général $\alpha$ est assez grand, de préférence supérieur à 60°. Ce corps est en métal, par exemple en acier inoxydable.

2

Le corps est mis en place dans une cavité présentant une surface intérieure biconique. Là encore, la forme générale de ladite surface est celle de deux cônes réunis symétriquement par leur base. Une section droite de la cavité est telle que les cônes ont deux angles au sommet $2\beta$, $\beta$ étant égal ou inférieur à 90° ; lorsque $\beta$ est égal à 90°, la cavité a généralement la forme d'une portion de cylindre ; lorsque $\beta$ est égal à $\alpha$, les surfaces en regard du corps et de la cavité sont parallèles ; $\beta$ peut être différent de $\alpha$, soit supérieur, soit inférieur ; $\beta$ est de préférence supérieur à $\alpha$ et les sommets des cônes en regard coïncident ; en général, $\beta$ est assez grand, de préférence supérieur à 60°. La cavité est réalisée en un métal, par exemple en acier inoxydable.

Le corps est de préférence disposé dans la cavité de façon que les axes du bicône formant ledit corps et de la surface biconique formant la cavité soient confondus ; lorsque la cavité a la forme d'un cylindre ($\beta = 90°$), l'axe du bicône est confonfu avec l'axe du cylindre.

Le corps mis en place dans la cavité détermine dans cette cavité un espace dit entrefer qui est l'espace situé entre la surface du corps et la surface interne de la cavité.

Le corps (ou la pièce formant la cavité) est pourvu de moyens permettant un entraînement en rotation autour de son axe, étant entendu que l'autre pièce reste fixe. Cet entraînement est effectué de préférence à l'aide d'un dispositif à couple imposé ; en fait, bien évidemment, ledit couple reste imposé durant une mesure ou une partie de celle-ci, mais la valeur du couple peut être modifiée à volonté d'une mesure à l'autre ou au cours d'une mesure. Le couple appliqué au corps ou à la cavité, étant donné la vitesse de rotation acquise par l'élément mobile, va dépendre des propriétés rhéologiques du fluide présent dans l'entrefer et peut constituer une mesure ou un repère de la viscosité dudit fluide ; un moyen permettant de mesurer cette vitesse de rotation fournira donc des renseignements sur la viscosité du fluide.

L'appareil selon l'invention sera complété par des moyens permettant l'amenée du fluide dans l'entrefer dans des conditions (notamment température) déterminées et également le maintien de conditions opératoires constantes pendant toute la durée de la mesure lorsque la mesure est opérée dans des conditions stationnaires ; l'appareil comportera également des moyens permettant l'évacuation du fluide.

Sur la figure 1, on a représenté schématiquement en coupe un mode de réalisation de l'invention.

On a représenté en 1 le corps, en 2 la pièce comportant la cavité, en 3 l'axe permettant de faire tourner la pièce 2, grâce à l'application sur cet axe d'un couple constant, en 4 un tube d'arrivée du liquide à étudier, en 5 un dispositif de sortie du liquide ; dans cette réalisation, on remarque que les surfaces en regard du corps et de la cavité sont parallèles et que c'est le corps qui est entraîné en rotation ; l'arrivée du liquide à étudier s'effectue par le tube 4 qui amène ledit liquide, selon l'axe du corps, dans l'entrefer 6 ; le liquide ressort en 5 ; de plus, le corps est fixe et c'est la pièce comportant la cavité qui est entraînée en rotation à couple constant par l'axe 3 ; dans cette réalisation, les surfaces en regard du corps et de la cavité sont parallèles.

Sur la figure 2, on a représenté en coupe un schéma des parties essentielles d'un appareil selon l'invention.

Le corps 1 est mis en place dans la cavité d'une pièce 2 ; cette pièce 2 est formée de deux parties vissées l'une sur l'autre de façon que l'on forme la cavité dans laquelle a été introduit le corps 1. La pièce 2 est fixée sur un axe 3 qui est entraîné par un moteur à courant continu (moteur non représenté sur la figure) par l'intermédiaire d'un réducteur 7 ; le fluide est amené par le tuyau 4 qui passe à travers le corps le long de son axe ; le corps est fixé ; dans la réalisation présentée, les surfaces en regard du corps et de la cavité sont parallèles ; le fluide ressort par l'ouverture 5 ménagée autour du tuyau 4.

Le fonctionnement du rhéomètre gradeur selon l'invention peut être décrit comme suit :

1) lorsque $\alpha = \beta$ et pour $\alpha$ proche de 90°, le fluide est soumis à un « écoulement de torsion » analogue à celui auquel il est soumis entre deux disques parallèles. Le gradient de vitesse auquel un volume élémentaire de fluide est soumis croît linéairement avec sa distance à l'axe où il est nul.

Si on impose un couple moteur tel que la tension maximale au bord du bicône soit identique à celle que les normes en vigueur imposent au niveau des parois du capillaire d'un gradeur, l'appareil pourra fournir directement une mesure (vitesse de rotation) très proche de l'indice de fusion du polymère utilisé comme fluide puisqu'il est soumis à un système de contraintes de même valeur et de même répartition spatiale.

2) Lorsque $\alpha$ est différent de $\beta$ et que les sommets des surfaces coniques coïncident deux à deux, on réalise un écoulement à gradient constant ; le rhéomètre fournit alors d'autres renseignements sur les propriétés rhéologiques du fluide étudié.

Le fluide peut être étudié en régime stationnaire, en régime transitoire ou en régimes alternatifs ; en régime stationnaire, le fluide, une fois inséré dans l'entrefer, y stationne jusqu'à ce que la vitesse de rotation atteigne son équilibre ; en régime transitoire, le fluide circule à travers l'entrefer avec un débit donné et on étudie la vitesse de rotation obtenue ; en régimes alternatifs (utilisables généralement durant un arrêt de la circulation du fluide), l'arbre assurant la rotation (du corps ou de la cavité) est soumis à des couples qui varient dans le temps selon des lois connues.

Les avantages du dispositif selon l'invention sont nombreux et on peut, par exemple, citer :

a) suppression de la nécessité de l'anneau de garde ;

b) équilibrage des forces en chaque point du dispositif, notamment des forces normales que développe le cisaillement des polymères, et des forces centrifuges exercées sur le fluide ;

c) erreurs beaucoup plus faibles (du 2e ordre) pouvant provenir de décentrages ou de jeux mécaniques des pièces en mouvement ;

d) possibilité d'alimentation en continu par un produit visqueux (fondu), tel qu'un polymère qui peut être sous pression et également possibilité d'alimentation programmée dans le temps.

Il est possible pour l'homme de l'art, sans sortir du cadre de l'invention, de mettre en œuvre tous les moyens techniques connus pour réaliser matériellement ladite invention.

Ainsi, par exemple, le moteur d'entraînement à couple déterminé sera de préférence un moteur à courant continu et à induit sans fer ; ce moteur pourra avantageusement être susceptible de fournir un couple proportionnel au courant d'alimentation ; pour la mesure du grade d'un produit, ledit couple sera imposé et correspondra à la tension normalisée pour le produit étudié au bord du bicône, mais, pour la version étude, ledit couple pourra être choisi par l'expérimentateur et pourra être asservi, si nécessaire ; mais, il serait possible d'utiliser tout autre moyen permettant l'obtention d'un couple imposé. Ainsi, également, le moyen le plus simple pour mesurer la vitesse d'entraînement — cette vitesse étant fonction des propriétés visqueuses ou élastiques du fluide dans l'entrefer — consiste à prendre la tension électrique aux bornes d'un enroulement tachymétrique, mais il sera possible d'utiliser tout moyen connu pour repérer et/ou mesurer ladite vitesse.

Dans une réalisation de l'invention, on a utilisé un corps dont le bicône symétrique avait un angle $\alpha$ de 80° ; ce bicône était disposé dans une cavité dont la surface interne était également biconique symétrique et présentent un angle $\beta$ de 80° ; l'entrefer était donc constitué par des surfaces parallèles ; le diamètre de la base du bicône constituant le corps était de 40 mm ; l'entrefer était de 2 mm. Dans ces conditions on a mesuré les propriétés d'un polyéthylène de grade 1 dans des conditions de températures normales ; pour un couple de 4 992 g/cm sur l'axe, on a obtenu une vitesse de rotation de 2,37 tr/min ; si on utilise un polyéthylène de grade 25 ce même couple conduit à l'obtention d'une vitesse de rotation de 59,25 tr/min.

**Revendications**

1. Appareil permettant de déterminer les propriétés rhéologiques d'un fluide, comportant :

— un premier élément (2) ayant une cavité formant un bicône d'angle au sommet 2$\alpha$, $\alpha$ étant au plus égal à 90°,

— un second élément (1) monté à l'intérieur de ladite cavité, ledit second élément ayant la forme d'un bicône d'angle au sommet 2$\beta$, $\beta$ étant au plus égal à 90°, les axes des deux bicônes étant confondus,

— des moyens (3) pour réaliser la rotation dudit premier élément (2) autour du second élément (1) et

— un conduit d'amenée (4) et un conduit de départ (5) dudit fluide dans la cavité située entre ledit premier élément (2) et ledit second élément (1), l'appareil étant caractérisé en ce que le conduit d'amenée (4) traverse ledit second élément (1) selon son axe et ledit conduit de départ (5) est situé autour dudit conduit d'amenée (4) et qu'on utilise des moyens pour amener le fluide dans des conditions opératoires constantes et avec un débit connu par ledit conduit d'amenée (4).

2. Appareil selon la revendication 1, caractérisé en ce que ledit premier élément (2) et ledit second élément (1) ont des surfaces parallèles.

**Claims**

1. Apparatus for determining the rheological properties of a fluid, comprising :

— a first element (2) having a cavity forming a double cone of vertex angle 2$\alpha$, $\alpha$ being equal to or smaller than 90°,

— a second element (1) mounted inside said cavity, said second element being shaped like a double cone, of vertex angle 2$\beta$, $\beta$ being equal to or smaller than 90°, the axes of the two double cones merge,

— means (3) for driving said first element (2) about the second element (1), and

— an inlet pipe (4) and an outlet pipe (5) of said fluid in the cavity situated between said first element (2) and said second element (1), the apparatus being characterized in that the inlet pipe (4) traverses said second element (1) along its axis and said outlet pipe (5) is situated around said inlet pipe (4) and in that means for conducting the fluid in constant operating conditions and with a flow known by said inlet pipe (4), are used.

2. Apparatus according to claim 1, characterized in that said first element (2) and said second element (1) have surfaces parallel together.

**Ansprüche**

1. Vorrichtung zum Bestimmen der Strömungseigenschaften eines Fludiums, mit :

— einem erstem Element (2) mit einem einen Doppelkonus mit einem Spitzenwinkel 2$\alpha$ bildenden Hohlraum, wobei $\alpha$ höchstens gleich 90° ist,

— einem im Inneren des Hohlraums angeordneten zweiten Element (1), wobei das zweite Element die Form eines Doppelkonus' mit einem Spitzenwinkel 2$\beta$ hat, wobei $\beta$ höchstens gleich 90° ist und die Achsen der beiden Doppelkonusse zusammenfallen,

— Mitteln (3) zum Bewirken der Rotation des ersten Elements (2) um das zweite Element (1), und

— einer Zuflußleitung (4) und einer Abflußleitung (5) für das Fluidum in dem zwischen dem ersten Element (2) und dem zweiten Element (1) befindlichen Hohlraum, welche Vorrichtung dadurch gekennzeichnet ist, daß die Zuflußleitung (4) das zweite Element (1) entlang seiner Achse durchquert und die Abflußleitung (5) um die Zuflußleitung (4) angeordnet ist, und daß man Mittel zum Zuführen des Fluidums unter konstanten Arbeitsbedingungen und mit bekannter Durchflußrate durch die Zuflußleitung (4) verwendet.

2. Vorrichtung nach Anspruch 1, dadurch gekennzeichnet, daß das erste Element (2) und das zweite Element (1) parallele Oberflächen haben.

0 015 195

Fig-1

Fig-2